# EUROPEAN PATENT SPECIFICATION

(11) **EP 0 775 063 B1**
(45) Date of publication and mention of the grant of the patent: **05.04.2000**
(21) Application number: 95905783.7
(22) Date of filing: 10.01.1995
(51) Int. Cl.: B60R 1/06

(54) **DEVICE FOR CONTROLLING TILTING ANGLES OF MOTOR-DRIVEN REARVIEW MIRRORS OF AUTOMOBILE**
VORRICHTUNG ZUR STEUERUNG DES NEIGUNGSWINKELS EINES FAHRZEUGRÜCKBLICKSPIEGELS
DISPOSITIF DE COMMANDE DES ANGLES D'ORIENTATION DES RETROVISEURS A SERVOMOTEUR DES AUTOMOBILES

(30) Priority: 09.08.1994 KR 9419594
(43) Date of publication of application: 28.05.1997
(73) Proprietor: Poong Jeong Ind. Co., Ltd., Puchon-ci, Kyunggi-do 421-130 (KR)
(72) Inventor: PARK, Ki, Hon Mokdong Apartment 13-danji 19-dong, Seoul 158-076 (KR); CHOI, Kun, Ho, Kyonggi-do 440-330 (KR); LEE, Gun, Hwan, Kyonggi-do 421-020 (KR)
(74) Representative: Chameroy, Claude
(86) International application number: KR9500001
(87) International publication number: WO9605080

(56) References cited:
- DE-A- 3 311 229
- DE-A- 4 029 890
- US-A- 4 915 493
- US-A- 4 940 322
- US-A- 4 986 646

## Description

### BACKGROUND OF THE INVENTION

### Field of the Invention

The present invention relates in general to device for controlling the tilting angles of motor-driven rearview mirrors of an automobile and, more particularly, to an improvement in such tilting angle control device for letting the rearview mirrors be more reliably tilted regardless of noise and for more precisely controlling the tilting angles of the rearview mirrors within a given tilting range.

### Description of the Prior Art

In prior art, there have been proposed and used several types of devices for controlling the tilting angles of automobile rearview mirrors as disclosed in Korean Patent Laid-open Publication No. 93-8565. Japanese U.M. Laid-open Publication Nos. Sho. 60-130155 and 60-134037 disclose devices for detecting and controlling, using positional sensors, the tilting angles of automobile rearview mirrors respectively. Japanese Patent Publication No. Heisei. 3-32496 discloses a device for detecting and controlling, using a piezo-electric element, the tilting angles of automobile rearview mirrors. Furthermore, U.S. Patent No. 4,915,493 and Japanese U.M. Laid-open Publication No. 63-101248 disclose devices for detecting and controlling, using potentiometers, the tilting angles of automobile rearview mirrors respectively. The generic document DE-A1-3311229 discloses a device using an optoelectronic sensor combined with an impulse forming device for sensing the angles of the rearview mirrors according to the features of the first part of claim 1. In each of the above tilting angle control devices, an electronic controller installed in an automobile detects, using a typical positional sensor, a positional displacement of a rearview mirror in accordance with mirror tilting operation and controls a mirror drive motor so as to let the rearview mirror be tilted at a desired tilting angle set by a driver.

However, neither of the above tilting angle control devices is designed, considering the effect of a noise infiltrating into a signal transmission line of the device. Therefore, the above devices have a problem that they can not achieve good operational reliability in control of the tilting angles of automobile rearview mirrors.

### SUMMARY OF THE INVENTION

It is, therefore, an object of the present invention to provide a device for controlling tilting angles of motor-driven rearview mirrors of an automobile in which the above problem can be overcome and which let the rearview mirrors be more reliably regulated regardless of noise and precisely control the tilting angles of the rearview mirrors within a given tilting range, thus to provide convenience in use of the rearview mirrors and to secure a high level of reliability in mirror tilting operation and to provide good rearview angles for a driver.

Accordingly, the present invention provides a device for a driver of an automobile to control tilting angles of motordriven rearview mirrors of the automobile comprising :
a processor ;
a key pad electrically connected to an input port of the processor and provided with a plurality of key switches wherein the tilting angle of a mirror panel is automatically controlled by the driver of the automobile by operation of the key pad ;
a pulse forming device comprising detecting means connected to the minor panel by joint links ;
a memory unit storing therein rearview angle data relative to conditions sensed by the detecting means, the processor counting the pulses of the pulse forming device and calculating how many pulses have been inputted from the pulse generator within a predetermined time period, comparing current angle represented by the pulses with positional data read out of the memory unit, and outputting a digital control signal ;
a motor drive circuit converting the digital control signal of the processor into an electric signal ;
a mirror drive motor tilting the mirror panel upward, downward, leftward and rightward in accordance with the electric signal of the motor drive circuit ;
   characterized in that said pulse forming device comprises said detecting means having a resistor with a resistance value and a condenser having an electrostatic value, one of said resistance value and said electrostatic capacitance value being in accordance with a positional displacement of the mirror panel, said pulse forming device outputting pulses having frequency determined by the resistance value and the electrostatic capacitance value.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view of a foldable, motor-driven rearview mirror assembly equipped with a mirror tilting angle control device of the invention, showing a construction of the mirror assembly;
Fig. 2 is a block diagram showing a construction of a mirror tilting angle control device in accordance with an embodiment of the invention;
Figs. 3 and 4 are sectional views of the rearview mirror assembly, showing mirror panel tilting operations carried out by the tilting angle control device of the invention;
Fig. 5 is a schematic view of digital detecting means of the variable resistor type of the tilting angle control device of the invention, showing a tilting angle detecting operation of the digital detecting means in response to positional displacement of the mirror panel;
Fig. 6 is a block diagram showing pulse generation of a pulse generator in accordance with resistance variation of the variable resistors of the digital detecting means of the invention;
Fig. 7 is a block diagram comparatively showing noise effect between a typical analog type control device and a digital type control device of the invention;
Fig. 8 is a block diagram of the tilting angle control device of the invention;
Fig. 9 is a flowchart of a main routine for controlling the tilting angles of rearview mirrors by the control device of the invention;
Fig. 10 is a flowchart of a subroutine for controlling the tilting angles of rearview mirrors using preset data stored in a memory unit of the control device of the invention;
Fig. 11 is a circuit diagram showing a relation between a processor, a memory unit and a back up circuit of the tilting angle control device of the invention; and
Fig. 12 is a circuit diagram showing a relation between the processor, the pulse controller, a motor drive circuit and key pad of the tilting angle control device of the invention.

### DESCRIPTION OF THE PREFERRED EMBODIMENTS

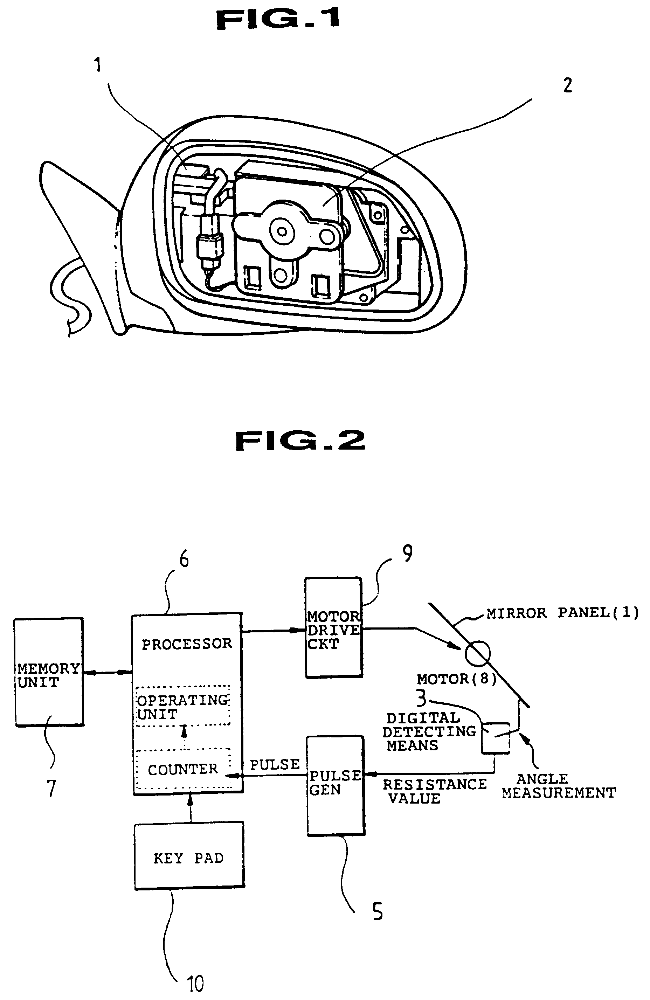

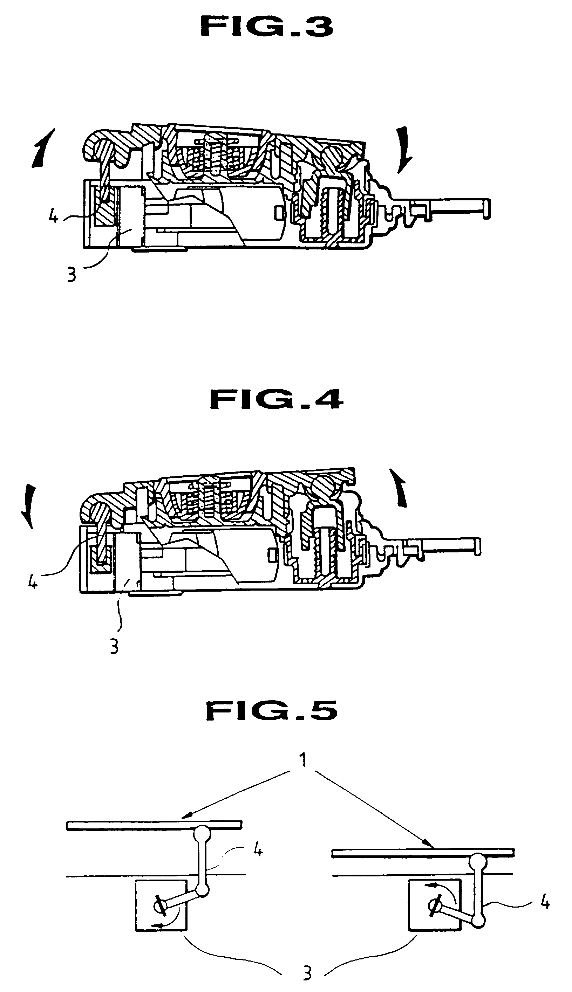

Fig. 1 is a perspective view of a foldable, motor-driven rearview mirror assembly equipped with a mirror tilting angle control device of the invention, Fig. 2 is a block diagram showing a construction of a mirror tilting angle control device in accordance with an embodiment of the invention, Figs. 3 and 4 are sectional views of the rearview mirror assembly, showing mirror panel tilting operations carried out by the tilting angle control device, and Fig. 5 is a schematic view of digital detecting means of the variable resistor type of the tilting angle control device of the invention, showing a tilting angle detecting operation of the digital detecting means in response to positional displacement of the mirror panel.

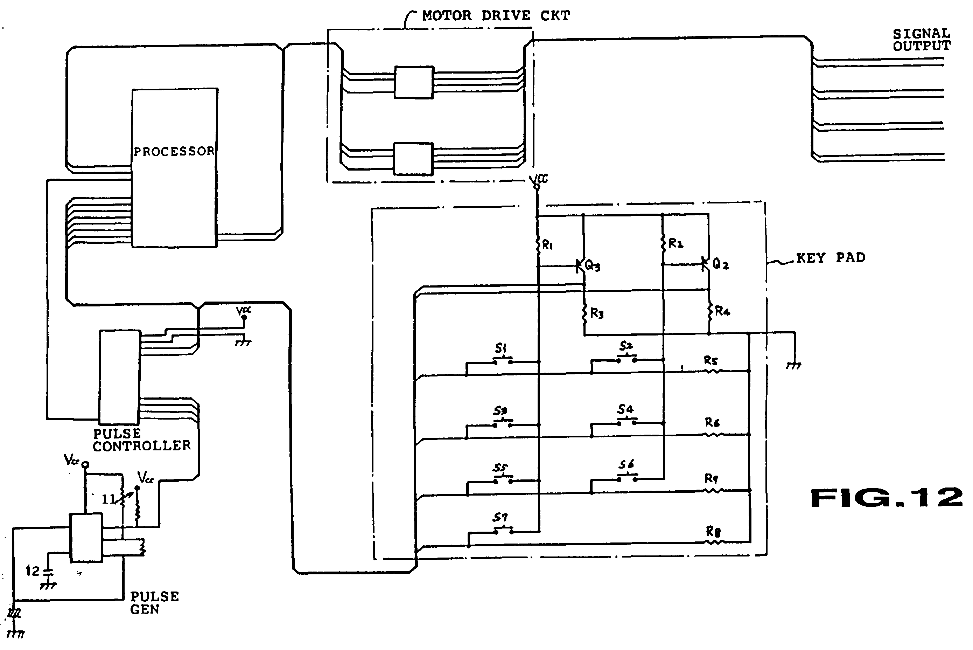

As shown in Fig. 1, the rearview mirror assembly includes a mirror panel 1 mounted on a mirror housing and a memory actuator 2 received in the mirror housing. As shown in Figs. 2 and 5, the tilting angle control device of the invention includes the detecting means 3, which means 3 includes four positional sensors comprising variable resistors and is adapted for outputting a predetermined resistance value in accordance with positional displacement of the mirror panel 1. The detecting means 3 is placed in the inside or the outside of a motor-driven mirror control case and electrically connected to the mirror panel 1 through a two joint link 4. The detecting means 3 is electrically connected to a pulse generator 5, which generator 5 converts the resistance value of the detecting means 3 into pulses having a frequency corresponding to the resistance value. The pulse generator 5 is electrically connected to an input port of a processor 6. The processor 6 counts the pulses of the pulse generator 5 and calculates how much pulses have been inputted thereto from the pulse generator 5 within a predetermined time, thus to determine a current angle of the mirror panel 1. The processor 6 also compares the current angle, represented by the pulses outputted from the pulse generator 5, with positional data read out of a memory unit 7 and outputs a control signal to a motor drive circuit 9. The memory unit 7 is electrically connected to the processor 6 and stores therein rearview angle data relative to conditions, such as driver's figure, entry into an express highway and parking of automobile, sensed by the detecting means 3. The motor drive circuit 9 is electrically connected to an output port of the processor 6 and applied with the control signal of the processor 6 and converts that control signal into an electric signal for driving a mirror drive motor 8. The mirror drive motor 8 is applied with the electric signal from the motor drive circuit 9 and tilts the mirror panel 1 upward, downward, leftward or rightward. The tilting angle control device of the invention also includes a key pad 10, which key pad 10 is electrically connected to an input port of the processor 6 and provided with a plurality of key switches S₁ - S₇ sh shown in Fig. 12.

The memory unit 7 includes a RAM as well as a ROM and is provided with a memory back up circuit (MBC) for prevention of possible loss of data of the RAM of the memory unit 7.

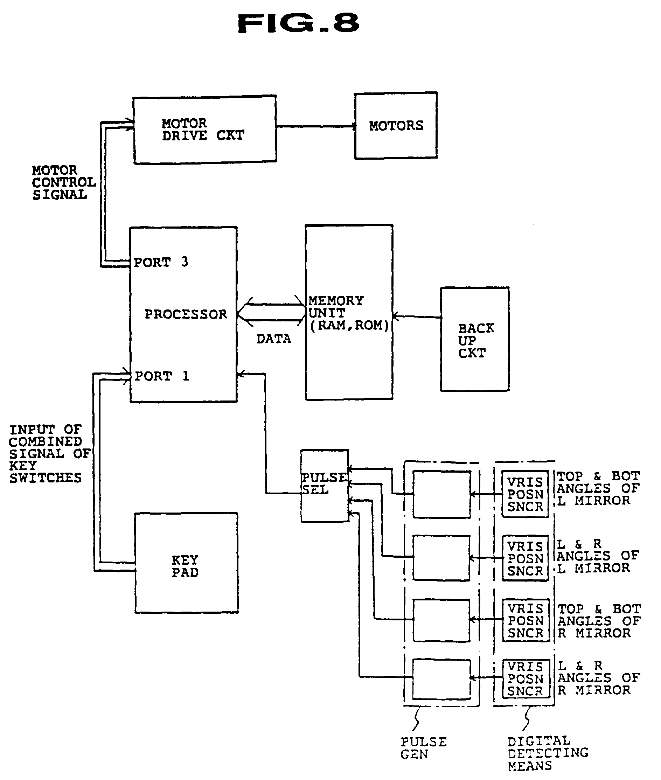

In operation of the above tilting angle control device, the seven key switches S₁ - S₇ of the key pad 10 are operated so that a combined signal of the key switches S₁ - S₇ is outputted to the processor 6. The processor 6 is applied with the combined signal at a port 1 as shown in Fig. 8.

The first to fourth key switches S₁ - S₄ are direction control key switches for directly tilting the mirror panel 1 upward, downward, leftward and rightward respectively. The above key switches S₁ - S₄ are also used as associated user key switches.

Upon reception of the combined key signal of the key switches S₁ - S₇ of the key pad 10, the processor 6 operates the signal and controls the tilting angle of the mirror panel 1 in response to the combined key signal. At this time, the mirror panel tilting operation mode of the processor 6 is generally classified into two modes.

That is, the processor 6 may control the mirror panel 1 through a basic operation mode. In the basic operation mode, the processor 6 lets the tilting angle of the mirror panel 1 be directly controlled in the same manner as a typical operation mode for controlling a typical motor-driven rearview mirror. The processor 6 also may control the mirror panel 1 through a memory-related operation mode. In the memory-related operation mode, the processor 6 automatically controls the tilting angle of the mirror panel 1 in accordance with data stored in the memory unit 7.

### 1. Basic mode:

When the processor 6 is applied with the combined signal of the direction control key switches S₁ - S₄ of the key pad 10, which switches S₁ - S₄ are operated in the same manner as a typical operation mode for controlling a typical motor-driven rearview mirror, the processor 6 primarily recognizes left and right rearview mirrors without relation to the memory unit 7 and directly outputs a control signal to the motor drive circuit 9 in order for driving the four motors, related to the left and right rearview mirrors, in forward direction and in reverse direction, and directly tilts the rearview mirrors at tilting angles set by a user.

### 2. Memory-related mode:

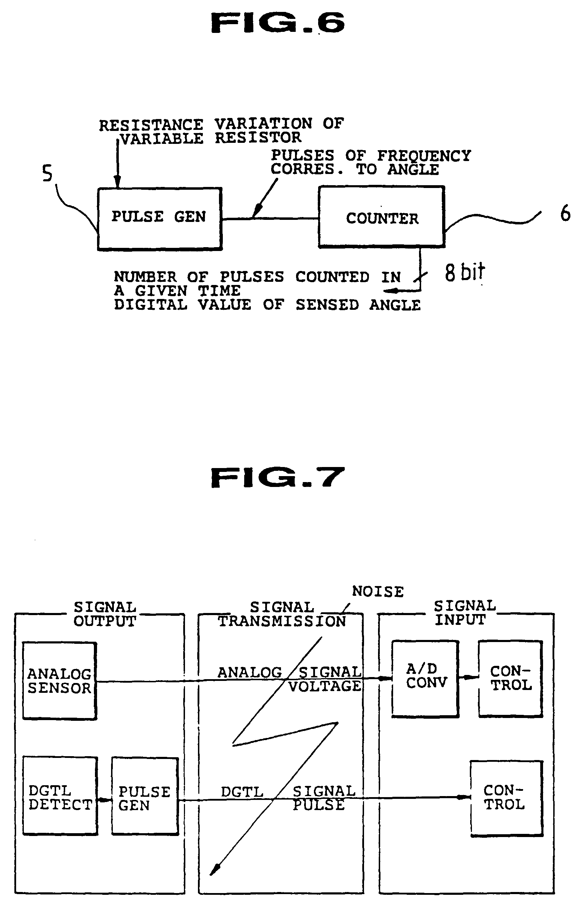

In order to store data in the memory unit 7, a combined key signal is applied to the processor 6 by operating a memory input key switch S₅ and an associated user key switch or one of the direction control key switches S₁ - S₄ of the key pad 10. Upon reception of the combined key signal, the processor 6 directly interrupts input of the signal from the key pad 10 but measures current top, bottom, left and right angles (regulated rearview tilting angles) of the left and right rearview mirrors and stores the measured tilting angles. At this time, the angles of the rearview mirrors are measured by the detecting means 3 including the four positional sensors comprising variable resistors placed in the inside or the outside of the motor-driven mirror control case. The detecting means 3 outputs a predetermined resistance value at a predetermined angle due to folding motion of the two joint link 4 connecting the detecting means 3 to the mirror panel 1, which folding motion of the link 4 is caused by tilting motion of the mirror panel 1. The resistance value of the detecting means 3 is applied to the pulse generator 5, which generator 5 converts the resistance value into pulses having a frequency corresponding to the resistance value and outputs the pulses to the processor 6. A pulse counter of the processor 6 counts the pulses outputted from the pulse generator 5 and calculates how much pulses have been continuously inputted to the processor 6 from the pulse generator 5 within a predetermined time, thus to calculate the time for input of a predetermined number of pulses as shown in Fig. 6. The processor 6 in turn stores the calculated data or the digital data of the detected tilting angles in associated sections of the memory unit 7. At this time, the digital data of the measured tilting angles are stored in the memory unit 7 in order of data of top and bottom tilting angles of the left mirror, data of left and right tilting angles of the left mirror, data of top and bottom tilting angles of the right mirror and data of left and right tilting angles of the right mirror. Otherwise stated, the memory unit 7 stores preset rearview angle data corresponding to varieties of conditions, such as driver's figure, entry into an express highway and parking of automobile.

On the other hand, in order for tilting the rearview mirrors using the data of the memory unit 7 and thereby securing rearview angles agreeable to specified conditions, the driver operates a memory output key switch S₆ and an associated user key switch (one of the direction control key switches S₁ - S₄) of the key pad 10. In this case, the processor 6 reads rearview angle data (positional data) out of the memory unit 7 in the other way of the case of operating the memory output key switch S₅. Upon reading the rearview angle data, the arithmetic unit of the processor 6 compares the positional data read out of the memory unit 7 with the current mirror angle and repeatedly outputs control signals until the current mirror angle and the positional data are of even value. The control signals of the processor 6 are applied to the motor drive circuit 9, which circuit 9 converts the control signals into electric signals for rotating the mirror drive motors 8. The electric signals of the drive circuit 9 are applied to the motors 8 connected to the mirror panels 1 so that the motors 8 tilt the mirror panels 1 in order for securing desired rearview angles in accordance with conditions.

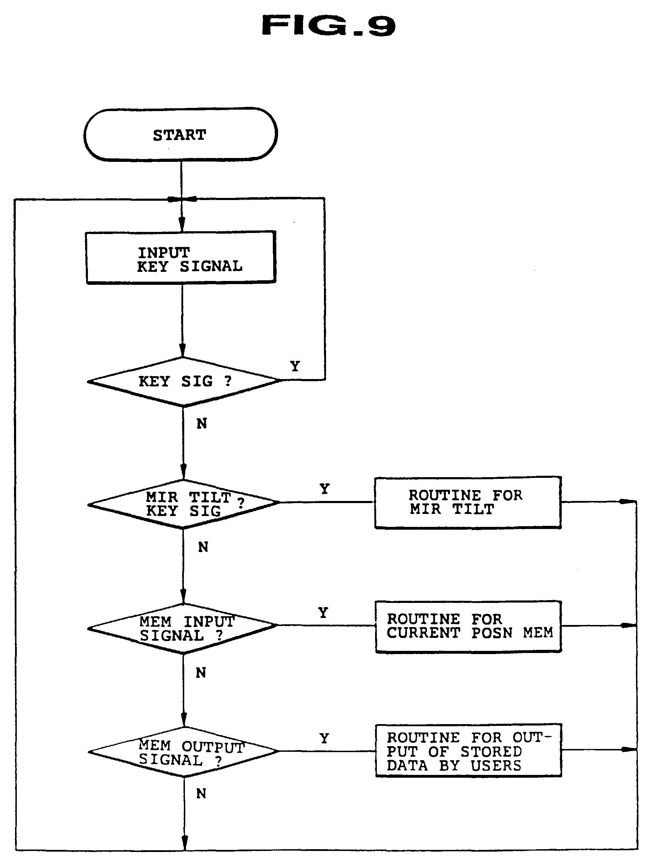

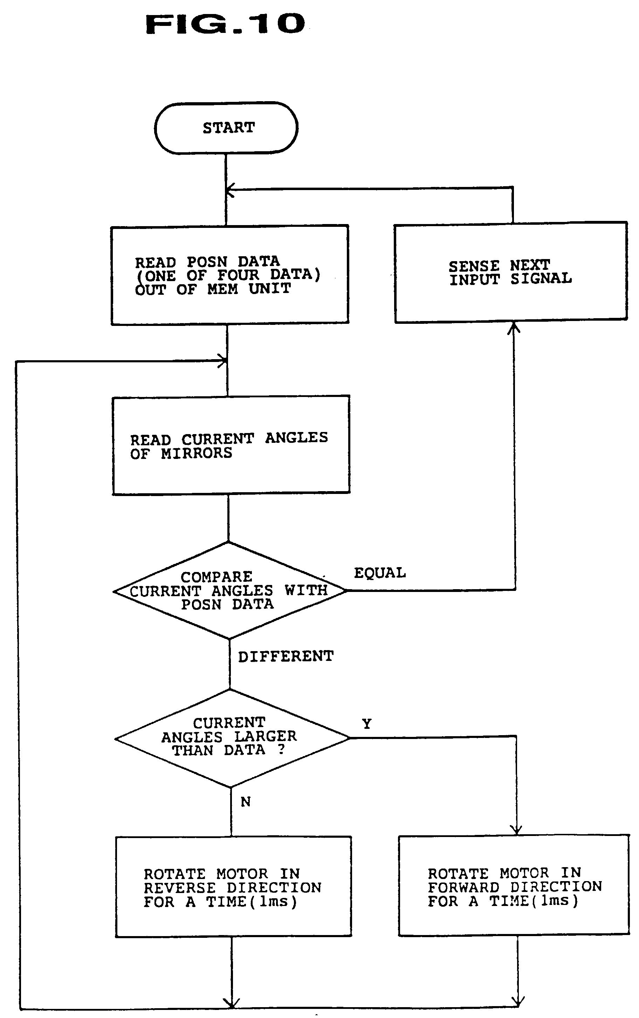

Turning to Figs. 9 and 10, there are shown a flowchart of a main routine for controlling the tilting angles of the rearview mirrors and a flowchart of a subroutine for controlling the tilting angles of the rearview mirrors using preset data stored in the memory unit 7. As shown in the drawings, when the processor 6 is applied with a key signal of the key pad 10, the processor 6 checks the input key signal in order for determining whether the key signal is a combined key signal of the key switches S₁ - S₇ of the key pad 10. When the key signal is not the combined key signal, the processor 6 lets the angles of the rearview mirrors be controlled by the key operation of the driver. When the key signal is the combined key signal, the processor 6 checks whether a memory input signal or a memory output signal has been inputted. When the memory input signal has been inputted, the processor 6 orderly stores top, bottom, left and right angles of the rearview mirrors in the memory unit 7, which top, bottom, left and right angles of the rearview mirrors are detected by the detecting means 3. However, when the memory output signal has been inputted, the processor 6 reads positional data out of the memory unit 7 and compares the positional data with current angles of the rearview mirrors, and outputs control signals to the motor drive circuit 9 until the positional data and the current angles of the rearview mirrors are of even values, thus to automatically control the rearview angles.

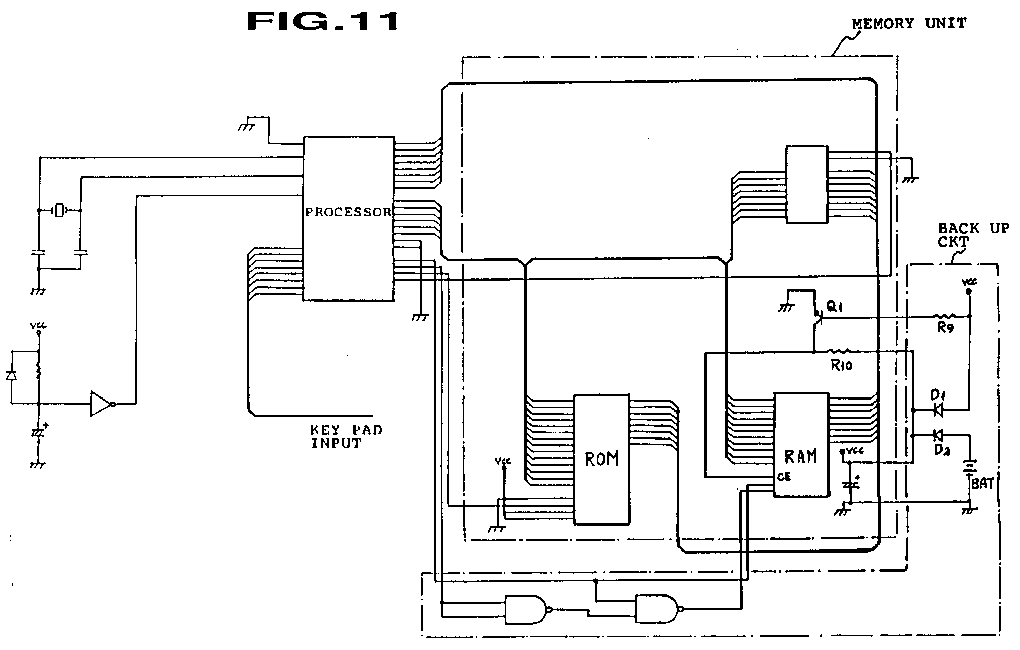

Referring to Figs. 8 and 11, the RAM of the memory unit 7 of the control device is provided with the back up circuit MBC so that the RAM can be supplied with minimum electric power, necessary for keeping the stored data of the RAM, from the back up circuit when the main power is shut off. Therefore, the RAM of the memory unit 7 is free from data loss even when the main power is shut off. That is, the RAM of the memory unit 7 is connected to both the main power source Vcc and the back up battery BAT through two switching diodes D₁ and D₂ respectively such that the RAM can be supplied with the electric power from either the main power source Vcc or the back up battery BAT. When the RAM is supplied with the power from the main power source Vcc, the back up battery BAT is shut off so that the power of the battery BAT can be saved. On the contrary, when the main power source Vcc is shut off, the RAM is supplied with the minimum power, necessary for prevention of data loss, from the back up battery BAT so that the RAM is free from data loss even when the main power source Vcc is shut off. When the RAM is supplied with minimum power from the back up battery BAT, the CE terminal signal of the RAM is a high signal due to switching action of an additional transistor Q₁, so that the data stored in the RAM is prevented from being deformed due to back up noise.

As described above, the control device of the invention senses the position of the mirror through a digital sensing process other than the typical analog sensing process, thereby providing a stable circuit scarcely deteriorated by noise.

As shown in Fig. 7, the noise generally infiltrates into the signal transmission line of the signal transmission section between the signal output part of the mirror and the signal input part of the controller. In the typical analog type control device, no A/D converter is installed in the signal output part so that the signal in the signal transmission section is an analog signal (voltage). However, in the digital type control device using the variable resistor positional sensors of the invention, the pulse generator has a simple construction and is readily installed in the signal output part. Therefore, the digital type control device of the invention applies the digital pulse signal to the controller.

When a noise infiltrates into the signal transmission section of the analog type control device, the noise-laden signal is applied to the A/D converter so that the controller is applied with a value deformed by the noise-laden signal.

Since a typical 8-bit A/D converter has a noise reserve of about 0.02 V so that the noise may be a deathblow to that A/D converter. In order to solve this problem, the typical analog type control device should be provided with a buffer and a filter in the signal output part and in the signal input part respectively.

The digital type control device transmits pulses having a predetermined frequency differently from the analog type control device so that the pulse counting number of the digital type control device changes when a noise infiltrates into the signal transmission section. Since the digital type control device has a noise reserve of at least 1 V and infiltration of the high frequency noise into the digital type control device is prevented due to limit of input frequency of the counter, the counting number deformed by the noise is reduced. In addition, the digital type control device has a reserve counting value for angle resolving power larger than that of the analog type control device as represented in the Table. Therefore, the digital type control device of the invention has a noise reserve wider than that of the analog type control device.

**Table**

| type | resolving power (angle) | signal reserve |
|---|---|---|
| analog | 0.04 | about 0.02 V |
| digital | 0.04 | about 40 pulses |

In addition, the variable resistance of variable resistor 11 of the digital detecting means 3 is in inverse proportion to the frequency. The characteristic of the above inverse proportion between the variable resistance and the frequency draws a curve in a graph. However, the radius of curvature of the curve may be negligible so that the characteristic of the above inverse proportion between the variable resistance and the frequency is represented by a straight line in the following graph.

In the tilting angle control device of the invention, the variable resistance of y-axis and the frequency of x-axis of the following graph may be free changed.

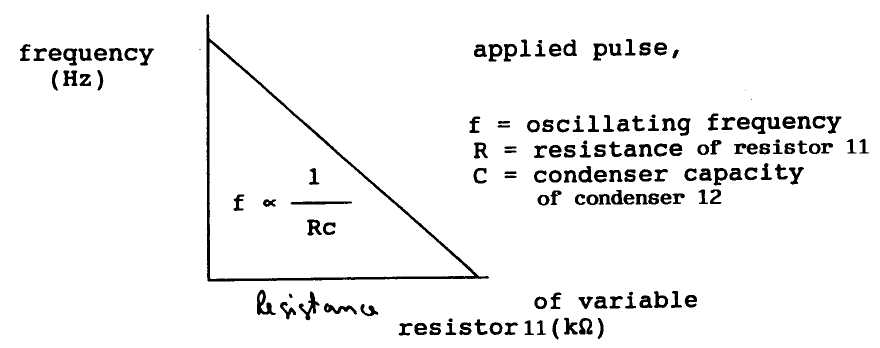

In the present invention, the positional sensors of the detecting means 3 may use four variable condensers instead of the variable resistors, each of which variable condensers outputs electrostatic capacity in accordance with positional displacement of the mirror panel 1.

As described above, the rearview mirror tilting angle control device of the present invention is provided with detecting means 3 and senses the angles of the rearview mirrors through a digital sensing process. Therefore, the present invention provides a stable circuit scarcely deteriorated by noise. Furthermore, the control device stores, in a memory unit of an electronic control unit installed in an automobile, rearview angle data relative to conditions, such as driver's figure, entry into an express highway and parking of automobile, so that the control device of the invention readily and rapidly provides an appropriate rearview angle for a driver.

## Claims

1. A device for a driver of an automobile to control tilting angles of motordriven rearview mirrors of the automobile comprising :
a processor (6) ;
a key pad (10) electrically connected to an input port of the processor and provided with a plurality of key switches (S₁ - S₇) wherein the tilting angle of a mirror panel (1) is automatically controlled by the driver of the automobile by operation of the key pad (10) ;
a pulse forming device (5) comprising detecting means (3) connected to the mirror panel by joint links (4) ;
a memory unit (7) storing therein rearview angle data relative to conditions sensed by the detecting means (3), the processor (6) counting the pulses of the pulse forming device (5) and calculating how many pulses have been inputted from the pulse generator within a predetermined time period, comparing current angle represented by the pulses with positional data read out of the memory unit (7), and outputting a digital control signal ;
a motor drive circuit (9) converting the digital control signal of the processor (6) into an electric signal ;
a mirror drive motor tilting the mirror panel (1) upward, downward, leftward and rightward in accordance with the electric signal of the motor drive circuit ;
characterized in that said pulse forming device (5) comprises said detecting means, having a resistor (11) with a resistance value and a condenser (12) having an electrostatic value, one of said resistance value and said electrostatic capacitance value being in accordance with a positional displacement of the mirror panel (1), said pulse forming device (5) outputting pulses having frequency determined by the resistance value and the electrostatic capacitance value.

2. The device according to claim 1, wherein a RAM of the memory unit (7) provided with a back up circuit, said back up circuit comprising a back up battery and a pair of switching diodes and adapted for supplying minimum electric power, necessary for keeping the stored data of the RAM, when a main power is shut off.

3. The device according to claim 1, wherein said resistor (11) is a variable resistor providing a resistance value in accordance with positional displacement of the mirror panel (1), and said condenser (12) has a constant capacitance value.

4. The device according to claim 1, wherein said condenser (12) of said pulse forming device (5) comprising said detecting means which is a variable condenser outputting an electrostatic value in accordance with positional displacement of the mirror panel, and said resistor (11) has a constant resistance value.

## Patentansprüche

1. Vorrichtung für einen Führer eines Kraftfahrzeugs zum Steuern der Neigungswinkel motorgetriebener Rückspiegel des Kraftfahrzeugs, die umfaßt:
einen Prozessor (6);
ein Tastenfeld (10), das mit einem Eingangsanschluß des Prozessors elektrisch verbunden und mit einer Vielzahl von Tastenschaltern (S1-S7) versehen ist, wobei der Neigungswinkel einer Spiegelscheibe (1) durch den Führer des Kraftfahrzeugs mittels Betätigung des Tastenfeldes (10) automatisch gesteuert wird;
eine Impulserzeugungsvorrichtung (5), die eine Erfassungseinrichtung (3) umfaßt, die mit der Spiegelscheibe über Gelenkverbindungen (4) verbunden ist;
eine Speichereinheit (7), in der Rückspiegelwinkeldaten in Bezug auf Bedingungen gespeichert werden, die von der Erfassungseinrichtung (3) erfaßt wurden, wobei der Prozessor (6) die Impulse der Impulserzeugungsvorrichtung (5) zählt und berechnet, wieviele Impulse von dem Impulserzeuger innerhalb eines vorgegebenen Zeitraums eingegeben wurden, den von den Impulsen dargestellten momentanen Winkel mit Positionsdaten vergleicht, die aus der Speichereinheit (7) ausgelesen wurden, und ein digitales Steuersignal ausgibt;
eine Motorantriebschaltung (9), die das digitale Steuersignal des Prozessors (6) in ein elektrisches Signal umwandelt;
einen Spiegelantriebsmotor, der die Spiegelscheibe (1) entsprechend dem elektrischen Signal der Motorantriebseinheit nach oben, nach unten, nach links und nach rechts schwenkt;
**dadurch gekennzeichnet,** daß die Impulserzeugungsvorrichtung (5) die Erfassungseinrichtung umfaßt, die einen Widerstand (11) mit einem Widerstandswert und einen Kondensator (12) mit einem elektrostatischen Wert aufweist, wobei entweder der Widerstandswert oder der elektrostatische Kapazitätswert einer Positionsverschiebung der Spiegelscheibe (1) entspricht und die Impulserzeugungsvorrichtung (5) Impulse ausgibt, deren Frequenz durch den Widerstandswert und den elektrostatischen Kapazitätswert bestimmt wird.

2. Vorrichtung nach Anspruch 1, wobei ein RAM der Speichereinheit mit einer Stützschaltung versehen ist und die Stützschaltung eine Stützbatterie (7) sowie ein Paar Schaltdioden umfaßt und eine minimale Elektroenergie zuführt, die erforderlich ist, um die gespeicherten Daten des RAM zu sichern, wenn die Hauptstromversorgung abgeschaltet wird.

3. Vorrichtung nach Anspruch 1, wobei der Widerstand (11) ein regelbarer Widerstand ist, der einen Widerstandswert entsprechend der Positionsverschiebung der Spiegelscheibe (1) erzeugt, und der Kondensator (12) einen konstanten Kapazitätswert aufweist.

4. Vorrichtung nach Anspruch 1, wobei der Kondensator (12) der Impulserzeugungsvorrichtung (5) die Erfassungseinrichtung umfaßt, bei der es sich um einen regelbaren Kondensator handelt, der einen elektrostatischen Wert entsprechend der Positionsverschiebung der Spiegelscheibe ausgibt, und der Widerstand (11) einen konstanten Widerstandswert aufweist.

## Revendications

1. Dispositif permettant au conducteur d'un véhicule automobile de régler les angles d'inclinaison de rétroviseurs actionnés par moteur du véhicule, comprenant :
un processeur (6) ;
un bloc de touches (10) relié électriquement à un accès d'entrée du processeur et pourvu de plusieurs commutateurs de touches (S₁ - S₇), l'angle d'inclinaison d'un miroir (1) étant réglé automatiquement par le conducteur du véhicule par actionnement du bloc de touches (10) ;
un dispositif générateur d'impulsions (5) comprenant des moyens de détection (3) reliés au miroir par des tringles articulées (4) ;
une unité de mémoire (7) mémorisant des données d'angles de rétroviseurs relatives à des états détectés par les moyens de détection (3), le processeur (6) comptant les impulsions du dispositif générateur d'impulsions (5) et calculant le nombre d'impulsions reçues en entrée à partir du générateur d'impulsions au cours d'une période de temps prédéterminée, comparant l'angle du moment représenté par les impulsions avec des données de position extraites de l'unité de mémoire (7), et délivrant en sortie un signal de commande numérique ;
un circuit de commande de moteur (9) qui convertit le signal de commande numérique du processeur (6) en un signal électrique ;
un moteur de commande de miroir qui incline le miroir (1) vers le haut, vers le bas, vers la gauche et vers la droite en fonction du signal électrique du circuit de commande de moteur ;
caractérisé en ce que ledit dispositif générateur d'impulsions (5) comprend lesdits moyens de détection qui comportent une résistance (11) ayant une valeur ohmique, et un condensateur (12) ayant une valeur de capacité électrostatique, l'une desdites valeurs ohmique et de capacité électrostatique étant fonction d'un changement de position du miroir (1), ledit dispositif générateur d'impulsions (5) délivrant en sortie des impulsions ayant une fréquence déterminée par la valeur ohmique et la valeur de capacité électrostatique.

2. Dispositif selon la revendication 1, dans lequel une mémoire à accès direct de l'unité de mémoire est munie d'un circuit de sauvegarde, ledit circuit de sauvegarde comprenant une batterie de sauvegarde (BAT) et deux diodes de commutation et étant adapté pour fournir une énergie électrique minimum, nécessaire à la conservation des données stockées de la mémoire à accès direct, en cas de coupure d'une alimentation principale.

3. Dispositif selon la revendication 1, dans lequel ladite résistance (11) est une résistance variable fournissant une valeur ohmique en fonction d'un changement de position du miroir (1), ledit condensateur (12) ayant une valeur de capacité constante.

4. Dispositif selon la revendication 1, dans lequel ledit condensateur (12) dudit dispositif générateur d'impulsions (5) comprend lesdits moyens de détection qui consistent en un condensateur variable fournissant en sortie une valeur électrostatique en fonction d'un changement de position du miroir, ladite résistance (11) ayant une valeur ohmique constante.
